# EUROPÄISCHE PATENTSCHRIFT

(11) **EP 1 167 556 B1**
(45) Veröffentlichungstag und Bekanntmachung des Hinweises auf die Patenterteilung: **16.08.2006**
(21) Anmeldenummer: 01890201.5
(22) Anmeldetag: 28.06.2001
(51) Int. Cl.: C22B 21/00, C22B 7/00, C22B 3/12, C01F 7/04

(54) **Verfahren zum Herauslösen von metallischem Aluminium aus aluminiumhaltigen, festen Abfällen**
Process for recovery of aluminium from aluminium-bearing solid waste materials by lixiviation
Procédé de récuparation de l'aluminium par lixiviation à partir de déchets alumineux solides

(30) Priorität: 28.06.2000 AT 11032000
(43) Veröffentlichungstag der Anmeldung: 02.01.2002
(73) Patentinhaber: Kostjak, Michael, Dipl.-Ing. Dr. Techn., 4212 Neumarkt i. M. (AT)
(72) Erfinder: Kostjak, Michael, Dipl.-Ing. Dr. Techn., 4212 Neumarkt i. M. (AT)
(74) Vertreter: Hübscher, Helmut

(56) Entgegenhaltungen:
- EP-A- 0 576 416
- WO-A-91/09978
- WO-A-99/43615
- DD-A- 208 338
- FR-A- 2 751 957
- JP-A- 2000 178 663
- SU-A- 636 308
- US-A- 4 252 776

## Beschreibung

Die Erfindung bezieht sich auf ein Verfahren zum Herauslösen von metallischem Aluminium aus aluminiumhaltigen, festen Abfällen.

Da pulverförmiges metallisches Aluminium bei entsprechenden Reaktionsbedingungen mit Wasser und/oder Luft heftige, stark exotherme Reaktionen unter Bildung von Wasserstoff eingehen kann, was besonders explosionsgefährlich ist, zählen Abfälle mit einem Anteil an pulverförmigem, metallischem Aluminium als Sondermüll, der obertags nicht deponiert, sondern nur untertags in Bergwerksstollen abgelagert werden darf. Dies gilt vor allem für die bei der Verbrennung von aluminiumhaltigem Abfallmaterial, insbesondere Verpakkungsmaterialien, anfallenden Verbrennungsaschen, die neben Aluminiumoxid auch metallisches Aluminium enthalten. Die Deponierung in aufgelassenen Bergwerksstollen ist allerdings wegen der recht begrenzten Anzahl geeigneter Stollen sehr beschränkt, bleibt umweltgefährdend und bringt keine Möglichkeit einer Wiederverwertung des vorhandenen Aluminiums mit sich.
Aus der Patentschrift SU-A-636308 ist bekannt, abfälle von Aluminiumfolien mit Deckschichten aus Papier oder organischem Material in einer 15 bis 50%-ingen Natronlauge bei einer Temperatur von 40 bis 100% aufzuschliessen.

Der Erfindung liegt daher die Aufgabe zugrunde, ein vergleichsweise einfaches Verfahren zum Herauslösen metallischen Aluminiums aus aluminiumhaltigen Abfällen anzugeben, so daß eine ungefährliche, umweltschonende Entsorgung des behandelten Abfalles gewährleistet werden kann, und zwar unter der Bedingung, das im Abfall enthaltene metallische Aluminium wieder verwerten zu können.

Die Erfindung löst diese Aufgabe dadurch, daß der zerkleinerte Abfall durch Zugabe von Alkalihydroxid und Wasser zu einem Gemisch mit breiartiger Konsistenz vermengt und unter einem Unterdruck aufgeschlossen wird; wobei der bei diesem Aufschluß frei werdende Wasserstoff abgeschieden wird, und daß nach dem Aufschluß das aus dem metallischen Aluminium gebildete Aluminat mit der wäßrigen Phase des Gemisches von der festen Phase abgetrennt wird.

Der durch diese Maßnahmen mögliche, einfache Aufschluß des metallischen Aluminiums erfolgt gemäß der Reaktionsgleichung allgemein: 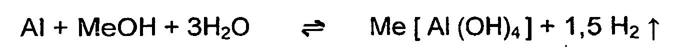 bei MeOH-Überschuß und einem pH-Wert pH ≥ 10
(Me = Alkalimetall, z.B. Na, K, Li; MeOH = Alkalihydroxid; Me [AI(OH)₄]= Aluminat)
bzw. speziell mit Na als Me: 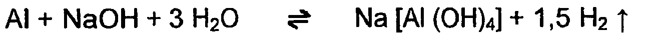 bei NaOH-Überschuß und pH ≥ 10

Durch den Aufschluß des aluminiumhaltigen Abfalles mit Alkalilauge, insbesondere Natron- oder Kalilauge (NaOH, KOH), wird metallisches Aluminium als Aluminat selektiv gelöst, wobei die chemische Zusammensetzung des restlichen Abfalles unbeeinflußt bleibt. Es muß nur dafür gesorgt werden, daß das Alkalihydroxid zum metallischen Aluminiumanteil des Abfalls gelangt, was einerseits durch die Zerkleinerung des Abfalls und anderseits durch die Zugabe von Wasser erreicht wird, so daß das Gemisch eine breiartige Konsistenz aufweist, die einen gleichmäßigen Aufschluß gewährleistet. Der beim Aufschluß frei werdende Wasserstoff unterstützt die Abtrennung von am metallischen Aluminium anhaftenden Bestandteilen des Abfalles, beispielsweise von Kunststoffbeschichtungen, so daß sich hinsichtlich des Aufschlusses besonders günstige Verhältnisse ergeben, zumal weder hinsichtlich der Temperatur noch des Druckes besondere Anforderungen zu stellen sind. Wegen des Einsatzes von Wasser ergibt sich ein Temperaturbereich zwischen 0 und 100 °C, wobei höhere Temperaturen in diesem vorgegebenen Temperaturbereich die Reaktionsgeschwindigkeit vergrößern. Der beim Aufschluß entstehende Wasserstoff wird abgeschieden und kann als Brennstoff zur Prozeßführung eingesetzt oder zu anderen Zwecken in Druckbehältern abgefüllt werden. Nach dem Aufschluß, dessen Ende sich anhand der Wasserstoffentwicklung oder durch eine Überwachung des pH-Wertes feststellen läßt, wird die wäßrige Phase des Gemisches von dessen fester Phase über geeignete Filter abgetrennt, wobei eine Aluminatlösung mit dem als Aluminat gelösten Aluminium erhalten wird. Dieses Aluminat kann nun zur Gewinnung von Aluminium oder für andere Einsatzzwecke weiterverwendet werden. Zu diesem Zweck empfiehlt es sich, die abgetrennte Aluminatlösung vor ihrer Weiterverwendung durch ein Abdampfen einzudicken. Die verbleibende feste Phase des Gemisches enthält praktisch kein metallisches Aluminium mehr und läßt sich problemlos auf herkömmliche Weise entsorgen bzw. weiterbehandeln.

Da für den Aufschluß der Abfälle keine besonderen Verfahrensbedingungen hinsichtlich der Druck- und Temperaturführung erforderlich sind, kann dem Abfall bereits während seiner Zerkleinerung Alkalihydroxid und Wasser zugesetzt werden, was unter Umständen ein sonst erforderliches Rührwerk überflüssig macht, wenn mit dem Zerkleinern der Abfälle eine entsprechende Mischung der zerkleinerten Abfälle mit dem Alkalihydroxid und Wasser einhergeht.

Erfolgt der Aufschluß bei einem pH-Wert pH ≥ 10 ergeben sich günstige Verhältnisse für die Lösung des metallischen Aluminiums beim Versatz mit Alkalihydroxid.

Liegt als Abfall Verpackungsmaterial oder anderes nicht verbranntes Abfallmaterial vor, kann die abgetrennte feste Phase des Gemisches einer Weiterbehandlung zur Wiederverwertung von Bestandteilen oder zur Entsorgung zugeführt werden. Da die feste Phase aus organischen Bestandteilen, wie Zellulose, Kunststoffen od. dgl., des Abfallmaterials besteht, können diese Bestandteile zur Herstellung von Papier oder Karton wiederverwendet und/oder einem Recyclingverfahren zur Kunststoffverwertung unterworfen werden. Außerdem ist die feste Phase durch den vorangegangenen Aufschluß frei von metallischem Aluminium, so daß auch eine Entsorgung durch Verbrennung ohne Entstehen gefährlicher Aschen oder durch Deponierung möglich ist.

Besteht am Aluminat kein Interesse, kann nach dem Aufschluß das Aluminat aus der wäßrigen Phase des Gemisches durch Zugabe einer Säure als Aluminiumhydroxid ausgefällt werden, so daß aus dem Aluminium des Abfalles Aluminiumhydroxid entsteht. Als Säure eignet sich dazu praktisch jede Säure, beispielsweise auch Salzsäure.

Das Ausfällen erfolgt gemäß der Reaktionsgleichung allgemein: 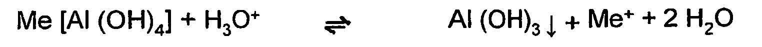 bzw. speziell mit Na als Me und HCl als Säure:

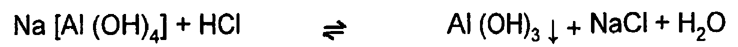

Ist die Wiederverwendbarkeit von Aluminat oder Aluminiumhydroxid ohne Bedeutung, können diese Stoffe selbstverständlich im Abfall verbleiben und mit dem Abfall schwierigkeitslos weiterbehandelt bzw. entsorgt werden.

Wie bereits ausgeführt wurde, ist der Aufschluß von metallischem Aluminium mit Hilfe von Alkalihydroxid im Gegensatz zum Aufschluß von Aluminiumoxid nach dem üblichen Bayer-Verfahren hinsichtlich der Temperatur- bzw. Druckführung unkritisch. Durch einen Aufschluß unter Unterdruckbedingungen ist es möglich den Austritt des anfallenden Wasserstoffs zu unterstützen, was im Zusammenhang mit dem Aufschluß von kunststoffbeschichtetem Aluminium von Bedeutung sein kann.

## Patentansprüche

1. Verfahren zum Herauslösen von metallischem Aluminium aus aluminiumhaltigen, festen, organischen Abfällen, die zerkleinert und durch Zugabe von Alkalihydroxid und Wasser zu einem Gemisch mit breiartiger Konsistenz vermengt und unter einem Unterdruck aufgeschlossen werden, wobei der bei diesem Aufschluß frei werdende Wasserstoff abgeschieden und nach dem Aufschluß das aus dem metallischen Aluminium gebildete Aluminat mit der wäßrigen Phase des Gemisches von der festen Phase abgetrennt wird.

2. Verfahren nach Anspruch 1, **dadurch gekennzeichnet, daß** die von der festen Phase abgetrennte Aluminatlösung vor ihrer Weiterverwendung durch ein Abdampfen eingedickt wird.

3. Verfahren nach Anspruch 1 oder 2, **dadurch gekennzeichnet, daß** dem Abfall während seiner Zerkleinerung Alkalihydroxid und Wasser zugesetzt wird.

4. Verfahren nach einem der Ansprüche 1 bis 3, **dadurch gekennzeichnet, daß** der Aufschluß bei einem pH-Wert pH ≥10 erfolgt.

5. Verfahren nach einem der Ansprüche 1 bis 4, **dadurch gekennzeichnet, daß** das Aluminat nach dem Aufschluß aus der wäßrigen Phase des Gemisches durch Zugabe einer Säure als Aluminiumhydroxid ausgefällt wird.

## Claims

1. Method for the recovery of metallic aluminium from aluminium-containing, solid, organic waste which is crushed and, through the addition of alkali hydroxide and water, mixed to form a mixture with a pulp-like consistency and pulped with underpressure, wherein the hydrogen released during this pulping is separated and after the pulping the aluminate formed from the metallic aluminium is separated with the aqueous phase of the mixture from the solid phase.

2. Method according to claim 1, **characterised in that** the aluminate solution separated from the solid phase is condensed through vaporisation before its further use.

3. Method according to claim 1 or 2, **characterised in that** alkali hydroxide and water are added to the waste during crushing.

4. Method according to one of the claims 1 to 3, **characterised in that** the pulping takes place at a pH value of pH >= 10.

5. Method according to one of the claims 1 to 4, **characterised in that** the aluminate, after the pulping, is precipitated from the aqueous phase of the mixture as aluminium hydroxide through the addition of an acid.

## Revendications

1. Procédé pour extraire à l'aide de solvants de l'aluminium métallique à partir de déchets organiques solides contenant de l'aluminium, qui subissent une fragmentation et, par addition de l'hydroxyde d'un métal alcalin et d'eau, sont mélangés pour donner un mélange ayant une consistance pâteuse, et sont attaqués en présence d'une dépression, procédé dans lequel l'hydrogène qui se dégage lors de l'attaque est séparé et, après l'attaque, on sépare de la phase solide l'aluminate, formé à partir de l'aluminium métallique, avec la phase aqueuse du mélange.

2. Procédé selon la revendication 1, **caractérisé en ce que** la solution d'aluminate séparée de la phase solide est épaissie, avant une utilisation ultérieure, par évaporation.

3. Procédé selon la revendication 1 ou 2, **caractérisé en ce que** les déchets, avant leur fragmentation, sont additionnés de l'hydroxyde d'un métal alcalin et d'eau.

4. Procédé selon l'une des revendications 1 à 3, **caractérisé en ce que** l'attaque est réalisée à un pH ≥ 10.

5. Procédé selon l'une des revendications 1 à 4, **caractérisé en ce que** l'aluminate, après l'attaque, est isolé de la phase aqueuse du mélange par précipitation, sous forme d'hydroxyde d'aluminium, sous l'effet de l'addition d'un acide.
